# EUROPEAN PATENT SPECIFICATION

(11) **EP 4 068 090 B1**
(45) Date of publication and mention of the grant of the patent: **19.02.2025**
(21) Application number: 20891496.0
(22) Date of filing: 23.09.2020
(51) Int. Cl.: G06F 9/455, G06F 9/48, G06F 9/50

(54) **CONTAINER SCHEDULING METHOD AND APPARATUS, AND NON-VOLATILE COMPUTER-READABLE STORAGE MEDIUM**
VERFAHREN UND VORRICHTUNG ZUR PLANUNG VON BEHÄLTERN UND NICHTFLÜCHTIGES COMPUTERLESBARES SPEICHERMEDIUM
PROCÉDÉ ET APPAREIL DE PLANIFICATION DE CONTENEURS ET SUPPORT DE STOCKAGE LISIBLE PAR ORDINATEUR NON-VOLATILE

(30) Priority: 26.11.2019 CN 201911175494
(43) Date of publication of application: 05.10.2022
(73) Proprietor: Beijing Jingdong Shangke Information Technology Co., Ltd., Beijing 100086 (CN); Beijing Jingdong Century Trading Co., Ltd., Beijing 100176 (CN)
(72) Inventor: BAI, Shi, Beijing 100086 (CN); CONG, Zhanlong, Beijing 100086 (CN); YANG, Guoqiang, Beijing 100086 (CN)
(74) Representative: Page White Farrer
(86) International application number: PCT/CN2020/117244
(87) International publication number: WO 2021/103790

(56) References cited:
- CN-A- 107 045 455
- CN-A- 108 228 347
- CN-A- 109 117 265
- CN-A- 109 117 265
- CN-A- 109 791 504
- CN-A- 110 287 029
- CN-A- 110 888 714
- US-A1- 2019 286 486
- US-B2- 9 571 347
- RAJKUMAR BUYYA ET AL: "Cost-Efficient Orchestration of Containers in Clouds: A Vision, Architectural Elements, and Future Directions", ARXIV.ORG, CORNELL UNIVERSITY LIBRARY, 201 OLIN LIBRARY CORNELL UNIVERSITY ITHACA, NY 14853, 10 July 2018 (2018-07-10), XP081115243
- SANTOS JOSE ET AL: "Towards Network-Aware Resource Provisioning in Kubernetes for Fog Computing Applications", 2019 IEEE CONFERENCE ON NETWORK SOFTWARIZATION (NETSOFT), IEEE, 24 June 2019 (2019-06-24), pages 351 - 359, XP033602018, DOI: 10.1109/NETSOFT.2019.8806671

## Description

### CROSS-REFERENCE TO RELATED APPLICATIONS

This application is based on and claims the priority to the Chinese patent application No. 201911175494.6 filed on November 26, 2019.

### TECHNICAL FIELD

This disclosure relates to the field of computer technologies, and particularly, to a scheduling method and apparatus of containers, and a non-transitory computer-readable storage medium.

### BACKGROUND

A container cloud is an important type of a current cloud computing platform, and is mainly applied in a private cloud scene to meet demands of customers for privatization and customization. When the container cloud is established by the customers, a container cloud cluster will be deployed in a self-built machine room, where hundreds of physical servers will be often deployed to carry business on the container cloud.

For example, a plurality of nodes can be configured as hosts for the running of containers. The nodes can be physical machines or virtual machines depending on the physical machines. Therefore, it is necessary to generate a suitable scheduling strategy for scheduling the containers to run on corresponding nodes.

In the related art, the scheduling strategy is generated mainly according to how resources are distributed evenly on each node.

D1 (RAJKUMAR BUYYA ET AL: "Cost-Efficient Orchestration of Containers in Clouds: A Vision, Architectural Elements, and Future Directions", ARXIV.ORG, CORNELL UNIVERSITY LIBRARY, 10 July 2018) proposes an architectural framework for the efficient orchestration of containers in cloud environments. It centres around resource scheduling and rescheduling policies as well as autoscaling algorithms that enable the creation of elastic virtual clusters. In this way, the proposed framework enables the sharing of a computing environment between differing client applications packaged in containers, including web services, offline analytics jobs, and backend pre-processing tasks. The devised resource management algorithms and policies will improve utilization of the available virtual resources to reduce operational cost for the provider while satisfying the resource needs of various types of applications. The proposed algorithms will take factors that are previously omitted by other solutions into consideration, including 1) the pricing models of the acquired resources, 2) and the fault-tolerability of the applications, and 3) the QoS requirements of the running applications, such as the latencies and throughputs of the web services and the deadline of the analytical and pre-processing jobs. The proposed solutions will be evaluated by developing a prototype platform based on one of the existing container orchestration platforms.

D2 (CN109117265A) provides a method, an apparatus, a device and a storage medium for scheduling jobs in a cluster. The method comprises the following steps of: acquiring pod data corresponding to a job; one or more target nodes are selected from the cluster according to the node scheduling condition in the pod data and the node state of each node in the cluster. A Pod is respectively deployed on each target node according to the Pod data, job processes are run in jobs in deployed pods. This technical solution deploys job processes in a containerized manner, as the different jobs can be deployed in each corresponding independent contain, the jobs of each application on the cluster can not affect each other, communication can be carried out in the scene needing to be interactive, the effective utilization of the cluster resources is realized, and stable job scheduling can be realized for projects requiring multi-application pipelined cooperation such as deep learning and the like.

D3 (SANTOS JOSE ET AL: "Towards Network-Aware Resource Provisioning in Kubernetes for Fog Computing Applications",2019 IEEE CONFERENCE ON NETWORK SOFTWARIZATION (NETSOFT), 24 June 2019, pages 351-359) proposes a network-aware scheduling approach for container-based applications in Smart City deployments. The proposal has been validated on the Kubernetes platform, an open source orchestrator for the automatic management and deployment of micro-services. The approach has been implemented as an extension to the default scheduling mechanism available in Kubernetes, enabling Kubernetes to make resource provisioning decisions based on the current status of the network infrastructure. Evaluations based on Smart City container-based applications have been carried out to compare the performance of the proposed scheduling approach with the standard scheduling feature available in Kubernetes.

### SUMMARY

The present invention is set out in the attached independent claims, with the dependent claims representing embodiments of the invention.

According to some embodiments of the present disclosure, there is provided a scheduling method of containers, comprising: determining predicted resource usage of a to-be-scheduled Pod replica according to resource usage of an already run Pod replica, wherein types of the already run Pod replica and the to-be-scheduled Pod replica are the same; determining at least one candidate node matched with the already run Pod replica according to the predicted resource usage and resource provision supported by candidate nodes; and scheduling the already run Pod replica to be run on the at least one candidate node.

In some embodiments, the determining at least one candidate node matched with the already run Pod replica comprises: determining the at least one candidate node matched with the already run Pod replica according to whether predicted resource usage of each type of resource in the predicted resource usage is matched with provision of each type of resource in the resource provision.

In some embodiments, the determining at least one candidate node matched the already run Pod replica comprises: judging whether the predicted resource usage of each type of resource in the predicted resource usage is greater than a usage threshold corresponding to each type of resource; determining a resource with predicted resource usage greater than a corresponding usage threshold as a demand resource; judging whether a current utilization rate, in each of the at least one candidate node, of each type of resource in the resource provision is less than a utilization rate threshold corresponding to each type of resource; determining a resource with a current utilization rate less than a corresponding utilization rate threshold as an available resource of each of the at least one candidate node; and determining the at least one candidate node matched with the already run Pod replica according to the matching of the demand resource and the available resource.

In some embodiments, the scheduling the already run Pod replica to be run on the at least one candidate node comprises: determining a number of physical machines that need to be awakened by the at least one candidate node according to the predicted resource usage and the resource provision of the at least one candidate node, wherein the number of the physical machines is a minimum number capable of meeting the predicted resource usage.

In some embodiments, the method further comprises: acquiring a historical change of the resource usage of the already run Pod replica; judging whether the to-be-scheduled Pod replica is currently in a peak or valley time period of a usage according to the historical change; and determining whether to increase a number of the to-be-scheduled Pod replica according to a result of the judgment.

In some embodiments, the acquiring a historical change of the resource usage of the already run Pod replica comprises: calculating average usage of each type of resource within a specified time period according to the resource usage of the already run Pod replica at each time moment within the specified time period; and determining the peak and valley time periods of the usage of each type of resource within the specified time period as the historical change according to the average usage.

In some embodiments, the method further comprises: estimating resource usage of the to-be-scheduled Pod replica at a target time moment according to the historical change; and under the condition that the currently awakened physical machine is incapable of meeting the resource usage at the target time moment, awakening a number of physical machines which are capable of meeting the resource usage at the target time moment to provide resources before the target time moment comes.

In some embodiments, the determining whether to increase a number of the to-be-scheduled Pod replica according to a result of the judgment comprises: under the condition that it is in the peak time period and a resource load of a certain to-be-scheduled Pod replica exceeds a load threshold, increasing the number of the to-be-scheduled Pod replica.

In some embodiments, the determining whether to increase a number of the to-be-scheduled Pod replica according to a result of the judgment comprises: under the condition that it is in the valley time period, decreasing the number of the to-be-scheduled Pod replica, and controlling an cleared physical machine to enter a sleep state.

In some embodiments, the method further comprises: according to the number of Pod replicas running on a corresponding physical machine of the at least one candidate node, controlling the corresponding physical machine to be in a high or non-high performance mode.

In some embodiments, the controlling the corresponding physical machine to be in a high or non-high performance mode comprises: under the condition that there is no Pod replica running on the corresponding physical machine, controlling the corresponding physical machine to be in a sleep mode; and under the condition that the number of Pod replicas running on the corresponding physical machine is less than a replica threshold, controlling the corresponding physical machine to be in a low performance mode.

In some embodiments, each of the at least one candidate node is determined according to at least one of the number of the to-be-scheduled Pod replica, a high availability demand, an affinity demand, or an exclusivity demand.

According to other embodiments of the present disclosure, there is provided a scheduling apparatus of containers, comprising: a usage determination unit configured to determine predicted resource usage of a to-be-scheduled Pod replica according to resource usage of an already run Pod replica, wherein types of the already run Pod replica and the to-be-scheduled Pod replica are the same; a node matching unit configured to determine at least one candidate node matched with the already run Pod replica according to the predicted resource usage and resource provision supported by candidate nodes; and a scheduling unit configured to schedule the already run Pod replica to be run on the at least one candidate node.

In some embodiments, the node matching unit determines the at least one candidate node matched with the already run Pod replica according to whether predicted resource usage of each type of resource in the predicted resource usage is matched with provision of each type of resource in the resource provision.

In some embodiments, the node matching unit judges whether the predicted resource usage of each type of resource in the predicted resource usages is greater than a usage threshold corresponding to each type of resource; determines a resource greater than the corresponding usage threshold as a demand resource; judges whether a current utilization rate, in each of the at least one candidate node, of each type of resource in the resource provision is less than a corresponding utilization rate threshold; determines a resource with a current utilization rate less than a corresponding utilization rate threshold as an available resource of each of the at least one candidate node; and determines the candidate nodes matched with the already run Pod replica according to the matching of the demand resource and the available resource.

In some embodiments, the scheduling unit determines the number of physical machines that need to be awakened by the at least one candidate node according to the predicted resource usage and the resource provision of the at least one candidate node, wherein the number of physical machines is a minimum number capable of meeting the predicted resource usage.

In some embodiments, the apparatus further comprises a judgment unit configured to judge whether the to-be-scheduled Pod replica is currently in a peak or valley time period of a usage according to an acquired historical change of the resource usage of the already run Pod replica, so as to determine whether to increase the number of the to-be-scheduled Pod replica according to the judgment result.

In some embodiments, the judgment unit calculates average usage of each type of resource within a specified time period according to the resource usage of the already run Pod replica at each time moment within the specified time period; and according to the average usage, determines the peak and valley time periods of the usage of each type of resource within the specified time period as the historical change.

In some embodiments, the apparatus further comprises a control unit configured to estimate resource usage of the to-be-scheduled Pod replica at a target time moment according to the historical change; and under the condition that the currently awakened physical machine is incapable of meeting the resource usage at the target time moment, awaken a number of physical machines which are capable of meeting the resource usage at the target time moment to provide resources before the target time moment comes.

In some embodiments, the control unit, under the condition that it is in the peak time period and a resource load of a certain to-be-scheduled Pod replica exceeds a load threshold, increases the number of the to-be-scheduled Pod replica.

In some embodiments, the control unit, under the condition that it is in the valley time period, reduces the number of to-be-scheduled Pod replica and controls an cleared physical machine to enter a sleep state.

In some embodiments, the control unit is configured to control, according to the number of Pod replicas running on a corresponding physical machine of the at least one candidate node, the corresponding physical machine to be in a high or non-high performance mode.

In some embodiments, the control unit controlling the corresponding physical machine to be in a high or non-high performance mode comprises: under the condition that there is no Pod replica running on the corresponding physical machine, controlling the corresponding physical machine to be in a sleep mode; and under the condition that the number of Pod replicas running on the corresponding physical machine is less than a replica threshold, controlling the corresponding physical machine to be in a low performance mode.

In some embodiments, each of the at least one candidate node is determined according to at least one of the number of the to-be-scheduled Pod replica, a high availability demand, an affinity demand, or an exclusivity demand.

According to still other embodiments of the present disclosure, there is provided a scheduling apparatus of containers, comprising: a memory; and a processor coupled to the memory, the processor being configured to perform, based on instructions stored in the memory, the scheduling method of the containers in any of the above embodiments.

According to further embodiments of the present disclosure, there is provided a non-transitory computer-readable storage medium having thereon stored a computer program which, when executed by a processor, implements the scheduling method of containers in any of the above embodiments.

### BRIEF DESCRIPTION OF THE DRAWINGS

The accompanying drawings described herein are used for providing a further understanding of the present disclosure and constitute a part of this application, and illustrative embodiments of the present disclosure and their description are used for explaining the present disclosure and do not constitute an improper limitation on the present disclosure. In the drawings:
Fig. 1 illustrates a flow diagram of some embodiments of a scheduling method of containers according to the present disclosure;
Fig. 2 illustrates a flow diagram of other embodiments of a scheduling method of containers according to the present disclosure;
Fig. 3 illustrates a schematic diagram of some embodiments of a scheduling apparatus of containers according to the present disclosure;
Fig. 4a illustrates a schematic diagram of some embodiments of node resource distribution according to the present disclosure;
Fig. 4b illustrates a schematic diagram of some embodiments of resource usage of a Pod replica according to the present disclosure;
Fig. 4c illustrates a schematic diagram of some embodiments of resource usage of two Pod replicas according to the present disclosure;
Fig. 4d illustrates a schematic diagram of some embodiments of a scheduling method of containers according to the present disclosure;
Fig. 5 illustrates a schematic diagram of other embodiments of a scheduling method of containers according to the present disclosure;
Fig. 6 illustrates a block diagram of some embodiments of a scheduling apparatus of containers according to the present disclosure;
Fig. 7 illustrates a block diagram of other embodiments of a scheduling apparatus of containers according to the present disclosure;
Fig. 8 illustrates a block diagram of still other embodiments of a scheduling apparatus of containers according to the present disclosure.

### DETAILED DESCRIPTION

The technical solutions in the embodiments of the present disclosure will be clearly and completely described below in conjunction with the accompanying drawings in the embodiments of the present disclosure, and it is obvious that the embodiments described are only some of the embodiments of the present disclosure, rather than all of them. The following description of at least one exemplary embodiment is merely illustrative in nature and in no way serves as any limitation on this disclosure and its application or use. All other embodiments, which can be derived by one of ordinary skill in the art from the embodiments in the present disclosure without making creative efforts, fall within the protection scope of the present disclosure.

The relative arrangements, numerical expressions and numerical values of components and steps set forth in these embodiments do not limit the scope of the present disclosure unless otherwise specified. Meanwhile, it should be understood that sizes of various portions shown in the drawings are not drawn to actual scales for ease of description. A technique, method, and device known to one of ordinary skill in the related art may not be discussed in detail but should be regarded as part of the granted specification where appropriate. In all examples shown and discussed herein, any specific value should be construed as exemplary only and not as limiting. Therefore, other examples of the exemplary embodiments can have different values. It should be noted that: similar reference numbers and letters refer to similar items in the following drawings, and therefore, once a certain item is defined in one drawing, it need not be discussed further in subsequent drawings.

Inventors of the present disclosure have found that, the related art described above have the following problem: since a scheduling strategy is not generated from the perspective of cluster management and maintenance, a mismatch between resource usage and resource provision is caused, resulting in a waste of system resources.

In view of this, in the present disclosure, there is provided a container scheduling technical solution, capable of reducing the waste of system resources.

As described above, when a customer establishes a container cloud, a container cloud cluster will be deployed in a self-built machine room, where hundreds of physical servers will often be deployed to carry business on the container cloud. A large number of physical servers running for a long time will result in huge energy consumption, and the more physical servers run, the greater the scale required for matched cooling and dust removal facilities is, which brings very huge continuous cost expenses such as electricity and management bills to the customer.

In view of the above technical problem, the present disclosure is based on container cloud technologies, uses a mechanism that Kubernetes in a container cloud is capable of strategically scheduling a Pod(set of containers), and focuses on clearing loads of part of physical machines through the Pod scheduling, to enter a sleep state without energy consumption. In this way, the resource usage can be matched with the resource demand as much as possible, which achieves the target of not only meeting the business demand, but also saving energy and reducing cost. This can be achieved, for example, by the following embodiments.

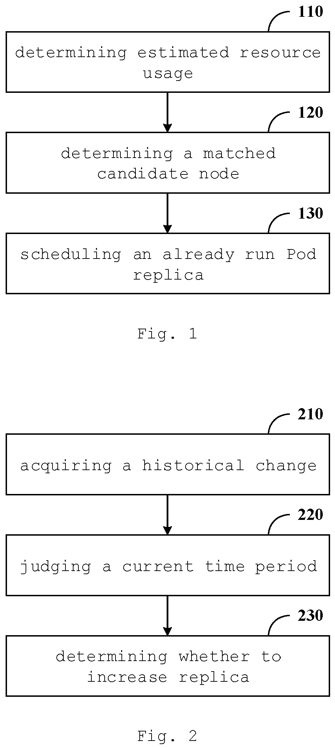

Fig. 1 illustrates a flow diagram of some embodiments of a scheduling method of containers according to the present disclosure.

As shown in Fig. 1, the method comprises: step 110, determining predicted resource usage; step 120, determining a matched candidate node; and step 130, scheduling an already run Pod replica.

In the step 110, the predicted resource usage of a to-be-scheduled Pod replica is determined according to resource usage of the already run Pod replica. Types of the already run Pod replica and the to-be-scheduled Pod replica are the same.

For example, Pod is a set of closely related containers and is a basic unit of Kubernetes scheduling. The plurality of containers in the Pod share a network and file system, so that they can complete a service in such a simple and efficient manner of inter-process communication and file sharing. A Pod replica is a set of Pods created by using one same Pod mode, and is controlled by RC (Replication Controller) or RS (Replica Set).

In some embodiments, the type of the Pod replica is determined depending on a corresponding Pod mode, and Pod replicas with the same Pod mode are of the same type. For example, the Pod mode can comprise at least one of a mirror image of a container comprised in the Pod, a corresponding specification of the mirror image, a corresponding service name, or the number of replicas. The specification can comprise hardware resource configuration information required for the mirror image, such as the number of CPU (Central Processing Unit) cores, memory capacity, network bandwidth, and storage capacity.

In some embodiments, one type of Pod mode can be determined by using one Pod template file, for example, a structure of one type of Pod mode is:

```
 {
 Mirror image 1, specification 1;
 Mirror image 2, specification 2;
 ...
 Mirror image n, specification n;
 Service name;
 The number of replicas;
 }
```

The specification can comprise the hardware configuration information such as the number of CPU cores, memory capacity, network bandwidth, and storage capacity. For example, a Pod with a label of X is created in the above manner, then the above structure is referred to as a Pod mode of Pod X.

In the step 120, the at least one candidate node matched with the already run Pod replica is determined according to the predicted resource usage and resource provision supported by candidate nodes.

In some embodiments, each of the at least one candidate node is determined according to at least one of the number of the to-be-scheduled Pod replicas, a HA (High Availability) demand, an affinity demand, or an exclusivity demand.

For example, affinity is a scheduling strategy when a Pod runs, and comprises: node Affinity, pod Affinity, and pod Anti-Affinity. The node Affinity is used for specifying on which node a Pod can or cannot be deployed. The pod Affinity is used for specifying along with which Pods the Pod can be deployed under one same topology. The pod Anti-Affinity is used for specifying along with which Pods the Pod cannot be deployed under the same topology, and together with the pod Affinity, settles relations between the pods.

In some embodiments, the at least one candidate node matched with the already run Pod replica is determined according to whether predicted resource usage of each type of resource in the predicted resource usage is matched with provision of each type of resource in the resource provision.

In some embodiments, it is judged whether the predicted resource usage of each type of resource in the predicted resource usage is greater than a corresponding usage threshold; a type of resource greater than the corresponding usage threshold is determined as a demand resource; it is judged whether a current utilization rate, in each of the at least one candidate node, of each type of resource in the resource provision is less than a corresponding utilization rate threshold; a type of resource with a current utilization rate less than the corresponding utilization rate threshold is determined as an available resource of each of the at least one candidate node; and the at least one candidate node matched with the already run Pod replica is determined according to the matching of the demand resource and the available resource.

In the step 130, the already run Pod replica is scheduled to run on the at least one candidate node.

In some embodiments, the number of physical machines that need to be awakened by the at least one candidate node is determined according to the predicted resource usage and the resource provision of the at least one candidate node, wherein the number of physical machines is a minimum number capable of meeting the predicted resource usage.

In some embodiments, current resource usage can also be predicted according to a historical change of the resource usage. This can be achieved, for example, by the embodiments in Fig. 2.

Fig. 2 illustrates a flow diagram of other embodiments of a scheduling method of containers according to the present disclosure.

As shown in Fig. 2, the method can further comprise: step 210, acquiring a historical change; step 220, judging a current time period; and step 230, determining whether to increase a replica.

In the step 210, the historical change of the resource usage of the already run Pod replica is acquired.

In some embodiments, average usage of each type of resource within a specified time period is calculated according to the resource usage of the already run Pod replica at each time moment within the specified time period; and according to the average usage, peak and valley time periods of the usage of each type of resource within the specified time period are judged as the historical change.

For example, under the condition that a difference between the usage of each type of resource and the average usage of each type of resource is greater than a peak threshold, the specified time period is determined as a peak time period; and under the condition that a difference between the average usage of each type of resource and the usage of each type of resource is greater than a valley threshold, the specified time period is determined as a valley time period.

In the step 220, according to the historical change, it is judged whether the to-be-scheduled Pod replica is currently in the peak or valley time period of a usage.

In the step 230, it is determined whether to increase the number of the to-be-scheduled Pod replicas according to a result of the judgment.

In some embodiments, under the condition that it is in the peak time period and a resource load of a single to-be-scheduled Pod replica exceeds a load threshold, the number of the to-be-scheduled Pod replicas is increased.

In some embodiments, under the condition that it is in the valley time period, the number of the to-be-scheduled Pod replicas is reduced, and an cleared physical machine is controlled to enter a sleep state.

In some embodiments, according to the historical change, resource usage of the to-be-scheduled Pod replica at a target time moment is predicted; and under the condition that the currently awakened physical machine is incapable of meeting the resource usage at the target time moment, a number of physical machines which are capable of meeting the resource usage at the target time moment are awakened to provide resources before the target time moment comes.

In some embodiments, according to the number of Pod replicas running on a corresponding physical machine of the at least one candidate node, the corresponding physical machine is controlled to be in a high or non-high performance mode.

For example, under the condition that there is no Pod replica running on a corresponding physical machine, the corresponding physical machine is controlled to be in a sleep mode; and under the condition that the number of Pod replicas running on corresponding physical machines is less than a replica threshold, the corresponding physical machine is controlled to be in a low performance mode.

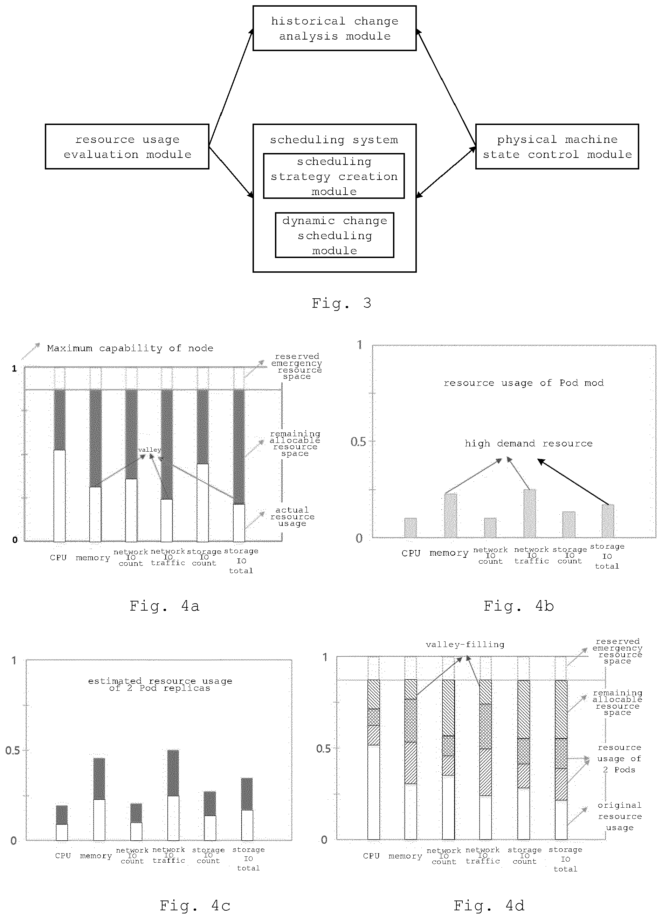

Fig. 3 illustrates a schematic diagram of some embodiments of a scheduling apparatus of containers according to the present disclosure.

As shown in Fig. 3, the scheduling apparatus can comprise a resource usage evaluation module, historical change analysis module, a scheduling system, and a physical machine state control module.

In some embodiments, the resource usage evaluation module (which can comprise a usage determination unit) is configured to evaluate statistical data of usage of resources in a Pod. The statistical data can provide a data basis for the historical change analysis module and the scheduling system.

In some embodiments, the resource usage evaluation module can record and evaluate resource usage of Pods with a same Pod mode. The resource usage can be represented by a 6-tuple. For example, the 6-tuple can comprise a CPU work instruction cycle count, memory usage, network IO (Input Output) count, network IO traffic, storage IO count, and storage IO total.

In some embodiments, the resource usage can be a numerical value counted within a unit time t. For example, t can be 1 second, 1 minute, 1 hour, or the like.

In some embodiments, an actual work instruction cycle count of a CPU can be used to accurately measure actual usage of the CPU by the Pod; the memory usage can be an accumulation value of memory usage per second within the time period t; and the network IO and the storage IO can be represented by count and total, for distinguishing cases of frequent IO and a large data amount of IO.

In some embodiments, the resource usage evaluation module, for the Pods with the same Pod mode, counts their resource usage, and calculates an average value thereof. The average value can also be divided by a maximum value that can be achieved by one physical machine to normalize the average value, so that numerical values corresponding to the 6-tuple are unified into 6 numerical values between 0 and 1.

For example, a maximum value of a CPU that can be achieved by a physical machine is all cycle counts of all cores of the physical machine within t; and a maximum value of a memory that can be achieved by the physical machine is a total of all memories of the physical machine minus memory usage of management and system programs.

A maximum value of the network IO count that can be achieved by the physical machine is the most network IO count (updated when there is a new maximum value) that are historically performed by a system within t; a maximum value of the network IO traffic that can be achieved by the physical machine is a maximum network transmission data amount that can be achieved within t, which is calculated according to network bandwidth; a maximum value of the storage IO count that can be achieved by the physical machine is the most storage IO count (updated when there is a new maximum value) that are historically performed by the system within t; and a maximum value of the storage IO total that can be achieved by the physical machine is a maximum transmission data amount that can be achieved within t, which is calculated according to storage bandwidth.

A normalized numerical value can be obtained by dividing the actual resource usage of the Pods with the same Pod mode by the maximum value. Except for the IO count, a sum of the resource usage of the plurality of Pods on one same physical machine cannot be greater than a capability value of the physical machine.

In some embodiments, when specifications of a plurality of physical machines are not the same or processing capabilities thereof are not consistent, the processing capabilities of the physical machines are also normalized. For example, corresponding indexes of all physical machines must be divided by a value of a corresponding index of a physical machine with a maximum processing capability, that is, normalized physical machine capability index = physical machine index value/maximum physical machine index value.

In some embodiments, resource provision of a node is a normalized 6-tuple, for measuring how many resources can be provided for the Pod by the node.

In some embodiments, the historical change analysis module (which can comprise a judgment unit) is configured to analyze a historical change (for example, a periodicity law) of usage of the Pod for resources such as a CPU, memory, network, and IO, thereby providing a decision basis for the scheduling system and the physical machine state control module.

In some embodiments, the usage of the Pod for the system resources changes in a wavy curve, which also generally shows a periodical change law. The change law of the system resource usage is generally caused by periodicity of human social activities. For example, most people work during the day and rest at night, causing systems interacting with people to be mostly busy during the day and idle at night. Therefore, better allocation of the resources can be realized by using the obtained change law.

In some embodiments, according to work, rest and activity laws of people, a cycle of the change law can be divided into time periods of day, week, month, year and the like.

In some embodiments, a law of resource usage of one day can be counted. For example, one time interval (for example, 1 minute) is taken as a unit time, and resource usage of Pods (Pod samples) with one same Pod mode is counted within each unit time.

For example, abnormal data points can be removed within a time range (for example, 20 days) to obtain an average value of resource usage of each time period within one day; and time ranges of peak and valley time periods of the average value of the resource usage are determined. Resource usage in the peak time period is obviously higher than average usage of each type of resource within one day; and resource usage in the valley time period is obviously lower than the average usage of each type of resource within one day.

In some embodiments, a law of resource usage of one week can be counted. For example, a time period of a certain day is taken as a unit time to count resource usage of Pods with one same Pod mode within each unit time. Within a time range(for example, 60 days), abnormal data points are removed to obtain an average value of resource usage of each day within one week. Time ranges of peak and valley time periods of the average value of the resource usage are determined.

In some embodiments, a law of resource usage of one month can be counted. For example, a time period of a certain day is taken as a unit time to count resource usage of Pods with one same Pod mode within each unit time. Within a time range (for example, 90 days), abnormal data points are removed to obtain an average value of resource usage of each day within one month. Time ranges of peak and valley time periods of the average value of the resource usage are determined.

In some embodiments, a law of resource usage of one year can be counted. For example, a time period of a certain day is taken as a unit time to count resource usage of Pods with one same Pod mode within each unit time. Within a time range of one year, abnormal data points are removed to obtain an average value of resource usage of each day within one year. Time ranges of peak and valley time periods of the average value of the resource usage are determined.

In some embodiments, through the four time spans of day, week, month and year, the peak and valley time periods of the resource usage can be clearly analyzed, for guiding resource allocation.

In some embodiments, the scheduling system (which can comprise a node matching unit and a scheduling unit) is responsible for dynamic scheduling of the system for Pod replicas when there is a Pod change such as increase, modification, and deletion. For example, dynamic scheduling mainly comprises scheduling when a Pod is created and scheduling when the Pod is modified and deleted. The scheduling system can comprise a scheduling strategy creation module and a dynamic change scheduling system.

In some embodiments, the scheduling strategy creation module can divide a scheduling strategy into three levels: a predicate strategy, a peculiarity strategy, and a set optimize strategy (or flex-grow strategy).

In some embodiments, the predicate strategy is used for filtering a node that does not meet a set condition. The set condition can comprise mutually exclusive setting between a Pod replica and a node, for example, a specified Pod replica cannot be deployed on a specified Node 1.

In some embodiments, the peculiarity strategy is used for determining a candidate node set meeting conditions according to technical characteristics demanded by the Pod replica after the filtering by the predicate strategy. The technical characteristics can comprise the number of the Pod replicas, a high availability demand, an affinity demand, an exclusivity demand, and the like.

In this way, performance and resource usage are not the only considerations for determining the at least one matched candidate node, and elements such as high availability, and high concurrency are also introduced, so that the scheduling effect is improved.

In some embodiments, the set optimize strategy is used for set optimization and is a first way of third-level scheduling. For example, all to-be-scheduled Pod replicas can be taken as one Pod set for consideration, and a strategy capable of forming optimal efficiency after the Pod set is scheduled to a candidate node set is selected for scheduling.

In some embodiments, optimal efficiency is that on the premise of meeting the set condition and the characteristic demand and under the condition that part of emergency traffic processing space is reserved, a load is capable of meeting a business demand and minimizing the energy consumption of the whole cluster.

For example, a workload can be allocated as far as possible to a small number of physical machines, and the small number of physical machines are capable of meeting resource and traffic demands, such that more physical machines can sleep. When a physical machine to which the workload has been already allocated has a less load, the physical machine enters an energy-saving mode, so as to have lowest energy consumption while the business traffic demand can be met.

In some embodiments, the set optimization can comprise the case where operations for two Pods are considered at the same time, for example, it is needed to delete one Pod replica and then create one new Pod replica. If one of a plurality of Pod replicas needs to be deleted, a scheduling program is capable of selecting an optimal delectable Pod replica, such that a newly created Pod replica can achieve the optimal efficiency.

In some embodiments, when a Pod replica is created, a main flow of the set optimize method is as follows.

Step 1, according to a template file for creating the Pod replica, determining a mode of the Pod replica, a set condition for creating the Pod replica, the number of the replicas and the like.

Step 2, excluding a node that does not meet the set condition. For example, a label is a label for identifying a Kubernetes object, and is attached to the object in a key-value manner. The label does not provide uniqueness and in fact, a same label is often used by many objects (for example, Pods) to label a specific application. Some nodes can be excluded by the label.

Step 3, dividing an allocatable candidate node set and distribution relations between a plurality of replicas of the Pod according to the technical characteristics such as the number of the Pod replicas, the high availability demand, the affinity demand, and the exclusivity demand.

For example, Pod replicas are allocated to at least two physical host nodes to ensure high availability across the physical machines; or, the Pod replicas are allocated to at least two racks of physical machines to ensure high availability across the racks; or, the Pod replicas are all allocated onto physical hosts with high bandwidth networks to ensure high concurrent access to the networks.

Step 4, if a Pod replica which has run for a period of time and has a same Pod mode as the to-be-scheduled Pod replica exists, acquiring a 6-tuple of actually used resource usage of recent resources of the Pod mode according to the resource usage evaluation module.

Step 5, matching the resource usage 6-tuple of the Pod replica set with a remaining resource usage 6-tuple of candidate nodes in the candidate node set, and calculating a matching strategy that enables the nodes to achieve 6 indexes balanced.

In some embodiments, if remaining resource usage in nodes on all physical hosts in a non-sleep state can support the creation of a new Pod replica, the Pod replica is scheduled to a corresponding node according to the balanced matching strategy. All to-be-scheduled Pod replicas are taken as one set for overall scheduling.

In some embodiments, several items with significantly higher indexes in the resource usage of the Pod replica can be determined as high demand resources; and resources with maximum availability in the node are selected as valley resources (provision resources) to be matched with the high demand resources. That is to say, indexes with large resource idleness are filled as fully as possible, so that all 6 indexes realize basically balanced allocation on the node.

In some embodiments, if some Pod replicas need to be scheduled to one same Node, resource usage of the Pod replicas that need to be allocated to the same Node is combined. For example, node resources are allocated if they can meet the demand.

For example, Figs. 4a to 4d are resource evaluation embodiments in which two Pod replicas are scheduled to one same Node.

Fig. 4a illustrates a schematic diagram of some embodiments of node resource distribution according to the present disclosure.

Fig. 4a shows a normalized resource actual utilization rate and remaining allocable resource space of one schedulable node. In order to guarantee that the system is capable of carry business traffic under the conditions of traffic jitter, burst and the like, a reserved emergency resource space is provided in the system. For example, proportions of reserved emergency resource spaces of related indexes such as CPU and memory can be different.

In some embodiments, a normalized average utilization rate of each type of resource can be calculated, and according to the normalized average utilization rate, valley resources with a lower utilization rate can be determined: memory, network IO traffic, and storage IO total.

Fig. 4b illustrates a schematic diagram of some embodiments of Pod replica resource usage according to the present disclosure.

Fig. 4b shows predicted resource usage that is predicted according to historical resource usage of already run Pod replicas with the same Pod mode as the to-be-scheduled Pod replica. Normalized average usage of each type of resource can be calculated, and according to the normalized average usage, high demand resources of the usage are determined: memory, network IO traffic, and storage IO total.

Fig. 4c illustrates a schematic diagram of some embodiments of resource usage of two Pod replicas according to the present disclosure.

Fig. 4c shows predicted resource usage of the two Pod replicas, each index being twice that of a single Pod. High demand resources are: memory, network IO traffic, and storage IO total. In this case, the high demand resource type and the valley resource type are just matched and the number of the valley resources can meet the high demand resources, then the two Pod replicas can be scheduled onto the node.

Fig. 4d illustrates a schematic diagram of some embodiments of a scheduling method of containers according to the present disclosure.

Fig. 4d shows resource usage when two Pod replicas are allocated to a schedulable node. The case of a plurality of nodes is similar to that of the single node, and both need to ensure that the predicted resource usage of the Pod can be met.

In some embodiments, if remaining resource usage in nodes on all physical hosts in a non-sleep state is not enough to support the creation of a new Pod replica, several sleeping physical hosts are awakened. Moreover, allocable resource usage of nodes on the awakened physical hosts and the original nodes is enabled to meet the resource usage total demand of the mode for creating the Pod replica.

In some embodiments, if there is no already run Pod replicas with the same Pod mode, the resource usage 6-tuple is predicted according to the resource demand (specification corresponding to each mirror image) in the template document. For example, the more cores are demanded, the greater the predicted CPU usage is. Then, according to the predicted resource usage, processing is performed according to the above embodiment.

In some embodiments, after all the Pod replicas are scheduled onto the nodes or all physical machines are awakened, no node capable of meeting the resource demand exists, then the scheduling is finished.

In some embodiments, a set optimization model of the set optimize strategy comprises: a target being that physical machines in the non-sleep state are minimized; a constraint condition being that the creation of all the Pod replicas meets the condition set in the template; the creation of all the Pod replicas meeting the technical characteristic demand; the created Pod replica being capable of meeting a business load; and resource usage of the Pod replica on each Node not exceeding a limit.

In some embodiments, the flex-grow strategy is used for flexible allocation of the Pod replicas, which is a second alternative of the third-level scheduling. For example, on the premise that constraint conditions of first two levels of scheduling are met, a part of Pod replicas are created first, and then the number of the Pod replicas is adjusted with reference to workloads of the Pod replicas.

In some embodiments, when a Pod is created, a main flow of the flex-grow flexible scheduling method is as follows:
step 1, according to a template file for creating a Pod replica, determining a mode of the Pod replica, and determining a set condition for creating the Pod, and the number of the replicas.
Step 2, excluding a node that does not meet the set condition for the creation. For example, certain nodes are excluded by a label.
Step 3, dividing an allocatable candidate node set and distribution relations between a plurality of replicas of the Pod according to the technical characteristics such as the number of the Pod replicas, the high availability demand, the affinity demand, and the exclusivity demand.

For example, Pod replicas are allocated onto at least two physical host nodes to ensure high availability across the physical machines. Or the Pod replicas are allocated onto at least two racks of physical machines to ensure high availability across the racks. Or the Pod replicas are allocated onto physical hosts with high bandwidth networks to ensure high concurrent access to the networks.

Step 4, selecting a maximum number of replicas in two cases as the number of the Pod replicas to be created. For example, the two cases comprise half of the number in Pod replicas created demand, a minimum number of replicas meeting the technical characteristics.

Step 5, performing Pod scheduling according to the number of Pod replicas determined in the step 4, and minimizing the number of physical machines in the non-sleep state under the condition that the set condition is met.

Step 6, increasing the number of Pod replicas when the resource usage of the Pod replicas is greater than an upper threshold. There are two options of a stride for the increase, in which one is that a unit increase is performed according to a set number and the other is that a unit increase is performed according to a set proportion, for example, stride can be the half after the total number minus the existing number. When increasing the number, the target that physical machines in the non-sleep state are minimized should also be met.

Step 7, decreasing the number of the Pod replicas when the resource usage of the Pod replicas is less than a lower threshold. There are two options of a stride for the decrease, in which one is that a unit decrease is performed according to a set number and the other is that a unit decrease is performed according to a set proportion, for example, the stride can be half of the existing number.

Step 8, repeating the steps 6 and 7, until the resource usage of the Pod replicas is between the upper and lower thresholds.

Step 9, if resources of the physical machines in the steps 6, 7 and 8 are cleared, recycling the physical machines and enabling the physical machines to enter the sleep state, and if the resources of the physical machines are insufficient, awakening sleeping physical machines to increase the resource provision.

In some embodiments, the dynamical change scheduling system performs scheduling using a flexible replica set that depends on the load state of each current Pod replica. For example, the number of Pod replicas, 3, which is set by the user, can be taken as a standard value; when an overall load of the Pod replicas is lower, the number of the Pod replicas is decreased under the condition that the constraint condition such as high availability is met; and when the overall load of the Pod replicas is higher, the number of the Pod replicas is dynamically increased to adapt to the demand.

In this way, the flexible replica set operation makes it possible to reduce the demand for a large number of computation resources in the cluster. Moreover, it can also enable part of physical machines in the cluster to enter the sleep state, to reduce the energy consumption of the cloud computing cluster. Since the electricity bill is one of main continuous expenses of the cloud computing platform, the running cost can be reduced.

A scheduling flow of the dynamic change scheduling system comprises:
step 1, analyzing a periodical law of resource usage of one Pod replica set for providing a service. As mentioned above, a peak time period, a valley time period and an average value of the resource usage can be analyzed according to four time spans of day, week, month and year.

For example, resource usage of one service is a sum of resource usage of all Pod replicas it contains. The system needs to ensure that a service resource demand total can be supported regardless of how many Pod replicas there are in total.

Step 2, through a maximum value of resource usage of a single Pod replica, calculating the number of Pod replicas required by a maximum resource demand (traffic peak) in each time period; and calculating the number of Pod replicas required by a minimum resource demand (traffic valley) in each time period.

Step 3, when the system is in the traffic peak, reserving enough resources to support the scheduling of the Pod replicas.

Step 4, during the normal running of the system, allocating several Pod replicas capable of meeting task load processing according to an average resource demand of the service.

Step 5, when the traffic peak comes, a resource demand increases, and a resource load of a single Pod replica exceeds a set threshold, starting the flow of increasing the number of the Pod replicas.

Step 6, increasing the number of the Pod replicas. For example, if there are not enough resources for allocation in the cluster, awakening the sleeping physical machines to increase the resource provision.

In some embodiments, a time T0 taken for awakening and initializing a physical machine is recorded; it is predicted that available physical host resources in the cluster at a time T will not meet the demand according to the periodical change of the resource usage; and an action of awakening a physical host is started at a time T-T0.

Step 7, after the physical resource is in place, scheduling the Pod replicas and associating the Pod replicas with the corresponding service.

Step 8, if the resource demand continues increasing, repeating the flow from the step 5 to the step 7, until the demand does not increase any more.

Step 9, when the traffic demand decreases and it is analyzed according to the resource demand law that the resource demand will restore to the normal state, gradually decreasing the number of Pod replicas; and controlling remaining Pod replicas to run with a high load and be capable of meeting the traffic demand. The Pod replicas can be scheduled as far as possible to a small number of physical hosts, to enable an cleared physical host to enter the sleep state.

Step 10, repeating the step 9 until the number of the Pod replicas is restored to the number required during the normal running of the system.

Step 11, when the traffic valley comes, decreasing the number of the Pod replicas first, which is contrary to the flow of processing the traffic peak; scheduling the Pod replicas as far as possible to a small number of physical hosts; enabling an cleared physical host to enter the sleep state. When the traffic increases, the number of the Pod replicas is increased to a normal value.

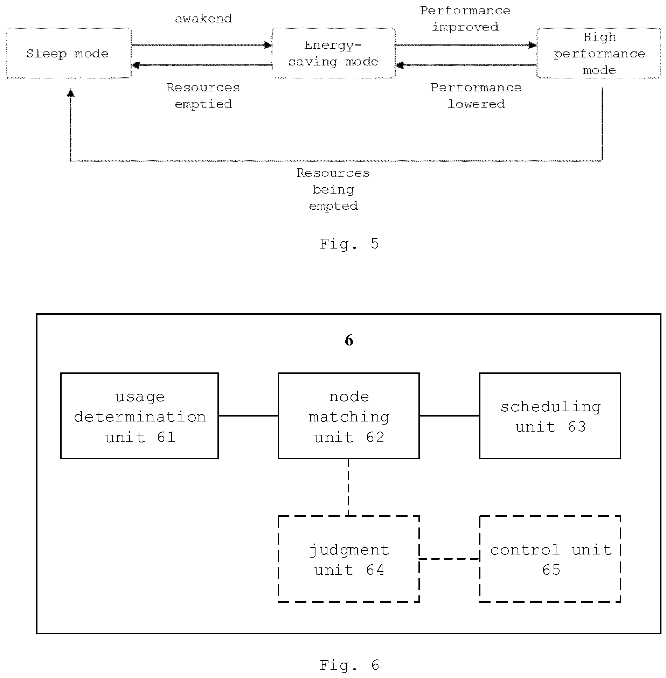

In some embodiments, the physical machine state control module (which can comprise a control unit) controls different states of the physical machine, such as a sleep mode, an energy-saving mode, and a high performance mode, according to a resource demand. For example, the physical machine mode can be controlled by the running of a Pod samples. This can be achieved, for example, by the embodiments of Fig. 5.

Fig. 5 illustrates a schematic diagram of other embodiments of a scheduling method of containers according to the present disclosure.

As shown in Fig. 5, when a physical machine is cleared, that is, there is no running Pod sample on it, it is judged whether recent business traffic will rebound. Under the condition that it will not rebound, the physical host is enabled to enter the sleep mode to minimize the energy consumption.

When only a small number of Pod samples (the number of which is less than the number threshold) are running on the physical machine and the actual resource usage is below the capability that can be provided by the physical machine, the physical machine is enabled to enter the energy-saving mode (low performance mode) . In this way, the energy consumption can be reduced while the resource usage is guaranteed.

When the physical machine is in the sleep mode and the system evaluates that more physical machine resources will be needed, a sleeping physical machine is awakened to enter the energy-saving mode, such that the awakened physical machine prepares for the resources and system running environment.

When the physical machine is in the energy-saving mode and the actual resource usage increases, the physical machine in the energy-saving mode cannot meet the performance demand, then the physical machine is enabled to enter the high performance mode.

When the physical machine is in the high performance mode and the actual resource usage decreases, the actual usage is far lower than the capability of the physical machine, then the physical machine is enabled to enter the energy-saving mode.

In the above embodiments, through the scheduling of the Pod samples, part of the physical machines in the container cloud enter the sleep state, thereby greatly reducing the energy consumption of the container cloud platform cluster and reducing the electricity cost.

In the above embodiments, by adopting the resource usage evaluation method based on the 6-tuple and the Pod mode, the possible resource usage of the Pod replica is evaluated more accurately, thereby providing a more accurate basis for the scheduling of the Pod replica.

In the above embodiments, the periodical law analysis method for the resource usage provided on the container cloud, by adopting a higher perspective, can better judge the time for allocation and recovery of the Pod replicas and resources.

In the above embodiments, a three-level Pod creation scheduling mechanism is provided, such that the Pod scheduling is performed for the goal of fewest physical machines, on the premise that various constraint conditions are met.

In the above embodiments, there is provided a Pod dynamic change scheduling mechanism. On the premise that the system load demand is met, the Pod is dynamically scheduled, for the goal of recycling resources and saving energy when the business traffic is in valley. When the business traffic increases, the business demand can also be met by allocating the resources.

In the above embodiments, the resource usage of the to-be-scheduled Pod replica is predicted according to the priori data of the resource usage of the Pod replica of the same type as the to-be-scheduled Pod replica; on the basis, the scheduling strategy is generated in conjunction with the number of resources which can be provided by each node. In this way, the resource usage of the system can be matched with the resource provision, to reduce the waste of the system resources.

Fig. 6 illustrates a block diagram of some embodiments of a scheduling apparatus of containers according to the present disclosure.

As shown in Fig. 6, the scheduling apparatus 6 of containers comprises a usage determination unit 61, a node matching unit 62, and a scheduling unit 63.

The usage determination unit 61 determines predicted resource usage of a to-be-scheduled Pod replica according to resource usage of an already run Pod replica, wherein types of the already run Pod replica and the to-be-scheduled Pod replica are the same.

The node matching unit 62 determines at least one candidate node matched with the already run Pod replica according to the predicted resource usage and resource provision supported by candidate nodes.

In some embodiments, the node matching unit 62 determines the at least one candidate node matched with the already run Pod replica according to whether the predicted resource usage of each type of resource in the predicted resource usage is matched with provision of each type of resource in the resource provision.

In some embodiments, the node matching unit 62 judges whether the predicted resource usage of each type of resource in the predicted resource usages is greater than a corresponding usage threshold; determines a type of resource greater than the corresponding usage threshold as a demand resource; judges whether a current utilization rate, in each of the at least one candidate node, of each type of resource in the resource provision is less than a corresponding utilization rate threshold; determines a type of resource with a current utilization rate less than the corresponding utilization rate threshold as an available resource of each of the at least one candidate node; and determines the at least one candidate node matched with the already run Pod replica according to the matching of the demand resource and the available resource.

The scheduling unit 63 schedules the already run Pod replica to be run on the at least one candidate node.

In some embodiments, the scheduling unit 63 determines the number of physical machines that need to be awakened by the at least one candidate node according to the predicted resource usage and the resource provision of the at least one candidate node, wherein the number of physical machines is a minimum number capable of meeting the predicted resource usage.

In some embodiments, the scheduling apparatus 6 further comprises a judgment unit 64 configured to judge whether the to-be-scheduled Pod replica is currently in a peak or valley time period of a usage according to an acquired historical change of the resource usage of the already run Pod replica, so as to determine whether to increase the number of the to-be-scheduled Pod replica according to a result of the judgment.

In some embodiments, the judgment unit 64 calculates average usage of each type of resource in a specified time period according to the resource usage of the already run Pod replica at each time moment within the specified time period; and according to the average usage, judges the peak and valley time periods of the usage of each type of resource within the specified time period as the historical change.

In some embodiments, the scheduling apparatus 6 further comprises a control unit 65 configured to estimate resource usage of the to-be-scheduled Pod replica at a target time moment according to the historical change; and under the condition that the currently awakened physical machine is incapable of meeting the resource usage at the target time moment, awaken a number of physical machines which are capable of meeting the resource usage at the target time moment to provide resources before the target time moment comes.

In some embodiments, the control unit 65, under the condition that it is in the peak time period and a resource load of a single to-be-scheduled Pod replica exceeds a load threshold, increases the number of the to-be-scheduled Pod replica.

In some embodiments, the control unit 65, under the condition that it is in the valley time period, decreases the number of the to-be-scheduled Pod replica and controls an cleared physical machine to enter a sleep state.

In some embodiments, the control unit 65 is configured to control, according to the number of Pod replicas running on a corresponding physical machine of the at least one candidate node, the corresponding physical machine to be in a high or non-high performance mode.

In some embodiments, the control unit 65 controlling the corresponding physical machine to be in a high or non-high performance mode comprises: under the condition that there is no Pod replica running on the corresponding physical machine, controlling the corresponding physical machine to be in a sleep mode; and under the condition that the number of Pod replicas running on the corresponding physical machine is less than a replica threshold, controlling the corresponding physical machine to be in a low performance mode.

In some embodiments, each of the at least one candidate node is determined according to at least one of the number of the to-be-scheduled Pod replica, a high availability demand, an affinity demand, or an exclusivity demand.

In the above embodiments, the resource usage of the to-be-scheduled Pod replica is predicted according to the priori data of the resource usage of the Pod replica of the same type as the to-be-scheduled Pod replica; on the basis, the scheduling strategy is generated in conjunction with the number of resources which can be provided by each node. In this way, the resource usage of the system can be matched with the resource provision, to reduce the waste of system resources.

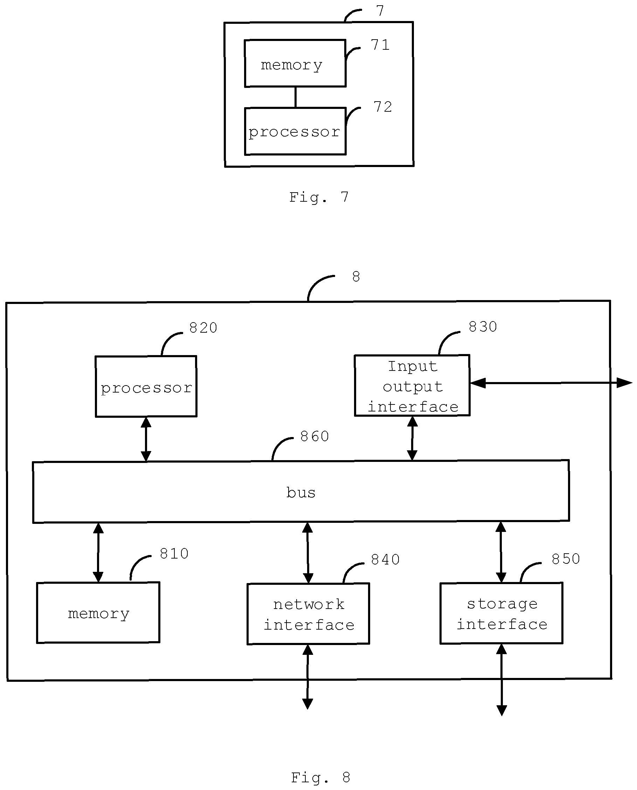

Fig. 7 illustrates a block diagram of other embodiments of a scheduling apparatus of containers according to the present disclosure.

As shown in Fig. 7, the scheduling apparatus 7 of containers of this embodiment comprises: a memory 71 and a processor 72 coupled to the memory 71, the processor 72 being configured to perform, based on instructions stored in the memory 71, the scheduling method of containers according to any of the embodiments of the present disclosure.

The memory 71 can comprise, for example, a system memory, a fixed non-transitory storage medium, and the like. The system memory has thereon stored, for example, an operating system, an application, a boot loader, a database, other programs, and the like.

Fig. 8 illustrates a block diagram of still other embodiments of a scheduling apparatus of containers according to the present disclosure.

As shown in Fig. 8, the scheduling apparatus 8 of containers of this embodiment comprises: a memory 810 and a processor 820 coupled to the memory 810, the processor 820 being configured to perform, based on instructions stored in the memory 810, the scheduling method of containers in any of the embodiments described above.

The memory 810 can comprise, for example, a system memory, a fixed non-transitory storage medium, and the like. The system memory has thereon stored, for example, an operating system, an application, a boot loader, other programs, and the like.

The scheduling apparatus 8 of containers can further comprise an input/output interface 830, a network interface 840, a storage interface 850, and the like. These interfaces 830, 840, 850, and the memory 810 and the processor 820 canbe connected, for example, through a bus 860. The input/output interface 830 provides a connection interface for input/output devices such as a display, a mouse, a keyboard, and a touch screen. The network interface 840 provides a connection interface for a variety of networking devices. The storage interface 850 provides a connection interface for external storage devices such as an SD card and a USB flash disk.

It should be appreciated by those skilled in the art that the embodiments of the present disclosure can be provided as a method, system, or computer program product. Accordingly, the present disclosure can take a form of an entire hardware embodiment, an entire software embodiment or an embodiment combining software and hardware aspects. Furthermore, the present disclosure can take a form of a computer program product implemented on one or more computer-available non-transitory storage media (comprising, but not limited to, a disk memory, CD-ROM, optical memory, and the like) having computer-usable program code embodied therein.

So far, the detailed description has been made according to the present disclosure. Some details well known in the art have not been described in order to avoid obscuring the concepts of the present disclosure. Those skilled in the art can now fully appreciate how to implement the technical solutions disclosed herein, in view of the foregoing description.

The method and system of the present disclosure may be implemented in a number of ways. The method and system of the present disclosure can be implemented, for example, in software, hardware, firmware, or any combination of software, hardware, and firmware. The above order for the steps of the method is for illustration only, and the steps of the method of the present disclosure are not limited to the order specifically described above unless specifically stated otherwise. Furthermore, in some embodiments, the present disclosure can also be implemented as programs recorded in a recording medium, the programs comprising machine-readable instructions for implementing the method according to the present disclosure. Therefore, the present disclosure also covers the recording medium having thereon stored the programs for executing the method according to the present disclosure.

Although some specific embodiments of the present disclosure have been described in detail by way of examples, it should be understood by those skilled in the art that the above examples are for illustration only and are not intended to limit the scope of the present disclosure. It should be appreciated by those skilled in the art that modifications can be made to the above embodiments without departing from the scope of the present disclosure. The scope of the present disclosure is defined by the attached claims.

## Claims

1. A computer-implemented scheduling method of containers, comprising:
determining predicted resource usage of a to-be-scheduled Pod replica according to resource usage of an already run Pod replica, wherein types of the already run Pod replica and the to-be-scheduled Pod replica are the same (110);
determining at least one candidate node matched with the already run Pod replica according to the predicted resource usage and resource provision supported by candidate nodes (120); and
scheduling the already run Pod replica to be run on the at least one candidate node (130);
wherein the determining predicted resource usage of a to-be-scheduled Pod replica according to resource usage of an already run Pod replica comprising:
determining the predicted resource usage according to historical resource usage of the already run Pod replicas with a same Pod mode as the to-be-scheduled Pod replica.

2. The scheduling method according to claim 1, wherein the determining at least one candidate node matched with the already run Pod replica (120) comprises:
determining the at least one candidate node matched with the already run Pod replica according to whether predicted resource usage of each type in the predicted resource usage is matched with provision of each type of resource in the resource provision.

3. The scheduling method according to claim 2, wherein the determining at least one candidate node matched the already run Pod replica (120) comprises:
judging whether the predicted resource usage of each type of resource in the predicted resource usage is greater than a usage threshold corresponding to each type of resource;
determining a resource with predicted resource usage greater than a corresponding usage threshold as a demand resource;
judging whether a current utilization rate, in each of the candidate nodes, of each type of resource in the resource provision is less than a utilization rate threshold corresponding to each type of resource;
determining a resource with a current utilization rate less than a corresponding utilization rate threshold as an available resource of each of the candidate nodes; and
determining the at least one candidate node matched with the already run Pod replica according to the matching of the demand resource and the available resource.

4. The scheduling method according to claim 1, wherein the scheduling the already run Pod replica to be run on the at least one candidate node (130) comprises:
determining a number of physical machines that need to be awakened by the at least one candidate node according to the predicted resource usage and the resource provision of the at least one candidate node, wherein the number of the physical machines is a minimum number meeting the predicted resource usage.

5. The scheduling method according to claim 1, further comprising:
acquiring a historical change of the resource usage of the already run Pod replica (210);
judging whether the to-be-scheduled Pod replica is currently in a peak or valley time period of a usage according to the historical change (220); and
determining whether to increase a number of the to-be-scheduled Pod replica according to a result of the judgment (230).

6. The scheduling method according to claim 5, wherein the acquiring a historical change of the resource usage of the already run Pod replica (210) comprises:
calculating average usage of each type of resource within a specified time period according to the resource usage of the already run Pod replica at each time moment within the specified time period; and
determining the peak and valley time periods of the usage of each type of resource within the specified time period as the historical change according to the average usage.

7. The scheduling method according to claim 5, further comprising:
estimating resource usage of the to-be-scheduled Pod replica at a target time moment according to the historical change; and
awakening, under the condition that the currently awakened physical machine does not meet the resource usage at the target time moment, a number of physical machines which meeting the resource usage at the target time moment to provide resources before the target time moment comes.

8. The scheduling method according to claim 5, wherein the determining whether to increase a number of the to-be-scheduled Pod replica according to a result of the judgment (230) comprises:
increasing the number of the to-be-scheduled Pod replica, under the condition that it is in the peak time period and a resource load of a certain to-be-scheduled Pod replica exceeds a load threshold.

9. The scheduling method according to claim 5, wherein the determining whether to increase a number of the to-be-scheduled Pod replica according to a result of the judgment (230) comprises:
decreasing the number of the to-be-scheduled Pod replica, and controlling an cleared physical machine to enter a sleep state, under the condition that it is in the valley time period.

10. The scheduling method according to any of claims 1 to 9, further comprising:
controlling a physical machine corresponding to the at least one candidate node to be in a first mode or a second mode, according to a number of Pod replicas running on the physical machine corresponding to the at least one candidate node, wherein a performance of the first mode is higher than a performance of the second mode.

11. The scheduling method according to claim 10, wherein the controlling a corresponding physical machine of the at least one candidate node to be in the first mode or the second mode comprises:
controlling the corresponding physical machine to be in a sleep mode, under the condition that there is no Pod replica running on the corresponding physical machine; and
controlling the corresponding physical machine to be in a low performance mode, under the condition that the number of Pod replicas running on the corresponding physical machine is less than a replica threshold.

12. The scheduling method according to any of claims 1 to 9, wherein
each of the at least one candidate node is determined according to at least one of a number of the to-be-scheduled Pod replica, a high availability demand, an affinity demand, or an exclusivity demand.

13. A scheduling apparatus of containers (7), comprising:
a memory (71); and
a processor (72) coupled to the memory, the processor being configured to perform, based on instructions stored in the memory, the scheduling method of containers according to any of claims 1 to 12.

14. A non-transitory computer-readable storage medium having thereon stored a computer program which, when executed by a processor, implements the scheduling method of containers according to any of claims 1 to 12.

## Patentansprüche

1. Ein computerimplementiertes Planungsverfahren von Containern, umfassend:
- Bestimmen einer vorhergesagten Ressourcennutzung einer zu planenden Pod-Replik basierend auf einer Ressourcennutzung einer bereits ausgeführten Pod-Replik, wobei Typen der bereits ausgeführten Pod-Replik und der zu planenden Pod-Replik identisch sind (110);
- Bestimmen mindestens eines Kandidatenknotens passend zu der bereits ausgeführten Pod-Replik gemäß der vorhergesagten Ressourcennutzung und der Ressourcenvorhaltung der Kandidatenknoten (120); und
- Planen der bereits ausgeführten Pod-Replik zur Ausführung auf dem mindestens einen Kandidatenknoten (130);
- wobei das Bestimmen der vorhergesagten Ressourcennutzung einer zu planenden Pod-Replik basierend auf der Ressourcennutzung einer bereits ausgeführten Pod-Replik umfasst:
- Bestimmen der vorhergesagten Ressourcennutzung basierend auf einer historischen Ressourcennutzung der bereits ausgeführten Pod-Repliken mit demselben Pod-Modell wie die zu planende Pod-Replik.

2. Das Planungsverfahren nach Anspruch 1, wobei das Bestimmen mindestens eines Kandidatenknotens passend zu der bereits ausgeführten Pod-Replik (120), umfasst:
- Bestimmen des mindestens einen Kandidatenknotens passend zu der bereits ausgeführten Pod-Replik, basierend darauf, ob vorhergesagte Ressourcennutzung jedes Typs in der vorhergesagten Ressourcennutzung mit der Bereitstellung jedes Ressourcentyps in der Ressourcenvorhaltung übereinstimmt.

3. Das Planungsverfahren nach Anspruch 2, wobei das Bestimmen mindestens eines Kandidatenknotens passend zu der bereits ausgeführten Pod-Replik (120), umfasst:
- Beurteilen, ob die vorhergesagte Ressourcennutzung jedes Ressourcentyps in der vorhergesagten Ressourcennutzung größer ist als ein Nutzungsschwellenwert für jeden Ressourcentyp;
- Bestimmen einer Ressource mit vorhergesagter Ressourcennutzung, die größer ist als ein entsprechender Nutzungsschwellenwert, als Bedarfsressource;
- Beurteilen, ob eine aktuelle Auslastungsrate, jeder der Kandidatenknoten von jedem Ressourcentyps in der Ressourcenvorhaltung kleiner ist als ein Auslastungsschwellenwert für jeden Ressourcentyp;
- Bestimmen einer Ressource mit einer aktuellen Auslastungsrate, die kleiner ist als ein entsprechender Auslastungsschwellenwert, als verfügbare Ressource jedes der Kandidatenknoten; und
- Bestimmen des mindestens einen Kandidatenknotens passend zu der bereits ausgeführten Pod-Replik, basierend auf der Übereinstimmung der Bedarfsressource und der verfügbaren Ressource.

4. Das Planungsverfahren nach Anspruch 1, wobei das Planen der bereits ausgeführten Pod-Replik zur Ausführung auf dem mindestens einen Kandidatenknoten (130) umfasst:
- Bestimmen einer Anzahl physischer Maschinen, die vom mindestens einen Kandidatenknoten gemäß der vorhergesagten Ressourcennutzung und der Ressourcenvorhaltung des mindestens einen Kandidatenknotens aktiviert werden müssen, wobei die Anzahl der physischen Maschinen die Mindestanzahl ist, die die vorhergesagte Ressourcennutzung erfüllt.

5. Das Planungsverfahren nach Anspruch 1, weiter umfassend:
- Erfassen einer historischen Veränderung der Ressourcennutzung der bereits ausgeführten Pod-Replik (210);
- Beurteilen, ob sich die zu planende Pod-Replik derzeit in einem Spitzen- oder Talzeitraum einer Nutzung befindet, basierend auf der historischen Veränderung (220); und
- Bestimmen, ob die Anzahl der zu planenden Pod-Replik basierend auf dem Ergebnis der Beurteilung erhöht werden soll (230).

6. Das Planungsverfahren nach Anspruch 5, wobei das Erfassen einer historischen Veränderung der Ressourcennutzung der bereits ausgeführten Pod-Replik (210) umfasst:
- Berechnen des durchschnittlichen Verbrauchs jedes Ressourcentyps innerhalb eines festgelegten Zeitraums basierend auf der Ressourcennutzung der bereits ausgeführten Pod-Replik zu jedem Zeitpunkt innerhalb des festgelegten Zeitraums; und
- Bestimmen der Spitzen- und Talzeiträume der Nutzung jedes Ressourcentyps innerhalb des festgelegten Zeitraums als historische Veränderung basierend auf dem durchschnittlichen Verbrauch.

7. Das Planungsverfahren nach Anspruch 5, weiter umfassend:
- Abschätzen der Ressourcennutzung der zu planenden Pod-Replik zu einem Zielzeitpunkt basierend auf der historischen Veränderung; und
- Aktivieren, unter der Bedingung, dass die derzeit aktivierten physischen Maschinen die Ressourcennutzung zum Zielzeitpunkt nicht erfüllen, einer Anzahl physischer Maschinen, die die Ressourcennutzung zum Zielzeitpunkt erfüllen, um die Ressourcen vor dem Zielzeitpunkt bereitzustellen.

8. Das Planungsverfahren nach Anspruch 5, wobei das Bestimmen, ob einer Anzahl der zu planenden Pod-Replik basierend auf dem Ergebnis der Beurteilung erhöht werden soll (230), umfasst:
- Erhöhen der Anzahl der zu planenden Pod-Replik, unter der Bedingung, dass sie sich im Spitzenzeitraum befindet und eine Ressourcenlast einer bestimmten zu planenden Pod-Replik einen Lastschwellenwert überschreitet.

9. Das Planungsverfahren nach Anspruch 5, wobei das Bestimmen, ob einer Anzahl der zu planenden Pod-Replik basierend auf dem Ergebnis der Beurteilung erhöht werden soll (230), umfasst:
- Verringern der Anzahl der zu planenden Pod-Replik und Steuern einer leeren physischen Maschine, um in einen Ruhezustand überzugehen, unter der Bedingung, dass sie sich im Talzeitraum befindet.

10. Das Planungsverfahren nach einem der Ansprüche 1 bis 9, weiter umfassend:
- Steuern einer physischen Maschine passend zu dem mindestens einen Kandidatenknoten, um in einem ersten Modus oder einem zweiten Modus zu sein, basierend auf einer Anzahl der auf der physischen Maschine laufenden Pod-Repliken, wobei eine Leistung des ersten Modus höher ist als die des zweiten Modus.

11. Das Planungsverfahren nach Anspruch 10, wobei das Steuern der physischen Maschine passend zu dem mindestens einen Kandidatenknoten, um in dem ersten Modus oder zweiten Modus zu sein, umfasst:
- Steuern der entsprechenden physischen Maschine, um in einem Ruhezustand zu sein, unter der Bedingung, dass keine Pod-Replik auf der entsprechenden physischen Maschine läuft; und
- Steuern der entsprechenden physischen Maschine, um in einem niedriger Leistung Modus zu sein, unter der Bedingung, dass die Anzahl der auf der entsprechenden physischen Maschine laufenden Pod-Repliken unter einem Replikatschwellenwert liegt.

12. Das Planungsverfahren nach einem der Ansprüche 1 bis 9, wobei jeder der mindestens einen Kandidatenknoten basierend auf zumindest einer Anzahl der zu planenden Pod-Replik, einer Hochverfügbarkeitsanforderung, einer Affinitätsanforderung oder einer Exklusivitätsanforderung.

13. Eine Planungsvorrichtung von Containern (7), umfassend:
- einen Speicher (71); und
- einen Prozessor (72), der mit dem Speicher gekoppelt ist, wobei der Prozessor dazu eingerichtet ist, basierend auf im Speicher gespeicherten Anweisungen, das Planungsverfahren von Containern nach einem der Ansprüche 1 bis 12 auszuführen.

14. Ein nicht-transitorisches computerlesbares Speichermedium mit einem darauf gespeicherten Computerprogramm, das, wenn es von einem Prozessor ausgeführt wird, das Planungsverfahren von Containern nach einem der Ansprüche 1 bis 12 implementiert.

## Revendications

1. Procédé mis en œuvre par ordinateur de planification de conteneurs, consistant à :
déterminer l'utilisation de ressources prédite d'une réplique de Pod à planifier, en fonction de l'utilisation de ressources d'une réplique de Pod déjà exécutée, dans lequel les types de la réplique de Pod déjà exécutée et de la réplique de Pod à planifier sont les mêmes (110) ;
déterminer au moins un nœud candidat correspondant à la réplique de Pod déjà exécutée, en fonction de l'utilisation de ressources prédite et de la fourniture de ressources prise en charge par des nœuds candidats (120) ; et
planifier l'exécution de la réplique de Pod déjà exécutée sur ledit au moins un nœud candidat (130),
dans lequel l'étape consistant à déterminer l'utilisation de ressources prédite d'une réplique de Pod à planifier en fonction de l'utilisation de ressources d'une réplique de Pod déjà exécutée consiste à :
déterminer l'utilisation de ressources prédite en fonction de l'utilisation de ressources historique des répliques de Pod déjà exécutées ayant le même mode de Pod que la réplique de Pod à planifier.

2. Procédé de planification selon la revendication 1, dans lequel l'étape consistant à déterminer au moins un nœud candidat correspondant à la réplique de Pod déjà exécutée (120) consiste à :
déterminer ledit au moins un nœud candidat correspondant à la réplique de Pod déjà exécutée, selon que l'utilisation de ressources prédite de chaque type dans l'utilisation de ressources prédite corresponde ou non à la fourniture de chaque type de ressource dans la fourniture de ressources.

3. Procédé de planification selon la revendication 2, dans lequel l'étape consistant à déterminer au moins un nœud candidat correspondant à la réplique de Pod déjà exécutée (120) consiste à :
juger si l'utilisation de ressources prédite de chaque type de ressource dans l'utilisation de ressources prédite est ou non supérieure à un seuil d'utilisation correspondant à chaque type de ressource ;
déterminer une ressource dont l'utilisation de ressources prédite est supérieure à un seuil d'utilisation correspondant, en tant que ressource de demande ;
juger si un taux d'utilisation actuel, dans chacun des nœuds candidats de chaque type de ressource dans la fourniture de ressources est ou non inférieur à un seuil de taux d'utilisation correspondant à chaque type de ressource ;
déterminer une ressource dont le taux d'utilisation actuel est inférieur à un seuil de taux d'utilisation correspondant, en tant que ressource disponible de chacun des nœuds candidats ; et
déterminer ledit au moins un nœud candidat correspondant à la réplique de Pod déjà exécutée, en fonction de la correspondance de la ressource de demande et de la ressource disponible.

4. Procédé de planification selon la revendication 1, dans lequel l'étape de planifier l'exécution de la réplique de Pod déjà exécutée sur ledit au moins un nœud candidat (130) consiste à :
déterminer un certain nombre de machines physiques qui nécessitent d'être réveillées par ledit au moins un nœud candidat, en fonction de l'utilisation de ressources prédite et de la fourniture de ressources dudit au moins un nœud candidat, dans lequel le nombre des machines physiques est un nombre minimal satisfaisant à l'utilisation de ressources prédite.

5. Procédé de planification selon la revendication 1, consistant en outre à :
acquérir un changement historique de l'utilisation de ressources de la réplique de Pod déjà exécutée (210) ;
juger si la réplique de Pod à planifier se trouve ou non actuellement dans une période de pointe ou de creux en matière d'utilisation, en fonction du changement historique (220) ; et
déterminer s'il faut ou non augmenter un certain nombre des répliques de Pod à planifier, en fonction d'un résultat du jugement (230).

6. Procédé de planification selon la revendication 5, dans lequel l'étape consistant à acquérir un changement historique de l'utilisation de ressources de la réplique de Pod déjà exécutée (210) consiste à :
calculer l'utilisation moyenne de chaque type de ressource au cours d'une période de temps spécifiée, en fonction de l'utilisation de ressources de la réplique de Pod déjà exécutée à chaque instant au cours de la période de temps spécifiée ; et
déterminer les périodes de pointe et de creux en matière d'utilisation de chaque type de ressource au cours de la période de temps spécifiée, en tant que changement historique en fonction de l'utilisation moyenne.

7. Procédé de planification selon la revendication 5, consistant en outre à :
estimer l'utilisation de ressources de la réplique de Pod à planifier à un moment cible, en fonction du changement historique ; et
réveiller, à condition que la machine physique actuellement réveillée ne réponde pas à l'utilisation de ressources au moment cible, un certain nombre de machines physiques qui répondent à l'utilisation de ressources au moment cible afin de fournir des ressources avant que le moment cible n'arrive.

8. Procédé de planification selon la revendication 5, dans lequel l'étape consistant à déterminer s'il faut ou non augmenter un certain nombre des répliques de Pod à planifier en fonction d'un résultat du jugement (230) consiste à :
augmenter le nombre de répliques de Pod à planifier, à condition d'être dans la période de pointe et qu'une charge de ressources d'une certaine réplique de Pod à planifier dépasse un seuil de charge.

9. Procédé de planification selon la revendication 5, dans lequel l'étape consistant à déterminer s'il faut ou non augmenter un certain nombre des répliques de Pod à planifier en fonction d'un résultat du jugement (230) consiste à :
diminuer le nombre des répliques de Pod à planifier ; et
contrôler qu'une machine physique libérée entre dans un état de veille, à condition d'être dans la période creuse.

10. Procédé de planification selon l'une quelconque des revendications 1 à 9, consistant en outre à :
contrôler qu'une machine physique correspondant audit au moins un nœud candidat soit dans un premier mode ou dans un deuxième mode, en fonction d'un certain nombre de répliques de Pod en cours d'exécution sur la machine physique correspondant audit au moins un nœud candidat, dans lequel la performance du premier nœud est plus élevée que la performance du deuxième nœud.

11. Procédé de planification selon la revendication 10, dans lequel l'étape consistant à contrôler qu'une machine physique correspondante dudit au moins un nœud candidat soit dans le premier mode ou dans le deuxième mode consiste à :
contrôler que la machine physique correspondante soit en mode veille, à condition qu'aucune réplique de Pod ne soit en cours d'exécution sur la machine physique correspondante; et
contrôler que la machine physique correspondante soit en mode basse performance, à condition que le nombre de répliques de Pod en cours d'exécution sur la machine physique correspondante soit inférieur à un seuil de réplique.

12. Procédé de planification selon l'une quelconque des revendications 1 à 9, dans lequel :
chacun dudit au moins un nœud candidat est déterminé en fonction d'au moins l'un parmi un certain nombre des répliques de Pod à planifier, une demande de grande disponibilité, une demande d'affinité et une demande d'exclusivité.

13. Appareil de planification de conteneurs (7), comprenant :
une mémoire (71) ; et
un processeur (72) couplé à la mémoire, le processeur étant configuré pour effectuer, sur la base d'instructions stockées dans la mémoire, le procédé de planification de conteneurs selon l'une quelconque des revendications 1 à 12.

14. Support de stockage non transitoire lisible par ordinateur, sur lequel est stocké un programme informatique qui, une fois exécuté par un processeur, met en œuvre le procédé de planification de conteneurs selon l'une quelconque des revendications 1 à 12.
